# EUROPEAN PATENT SPECIFICATION

(11) **EP 1 877 887 B1**
(45) Date of publication and mention of the grant of the patent: **23.12.2009**
(21) Application number: 05736047.1
(22) Date of filing: 22.04.2005
(51) Int. Cl.: G06F 21/20, G06F 21/24

(54) **A SYSTEM AND METHOD FOR PROTECTING THE PRIVACY AND SECURITY OF STORED BIOMETRIC DATA**
SYSTEM UND VERFAHREN ZUM SCHUTZ DER PRIVATSPHÄRE UND SICHERHEIT GESPEICHERTER BIOMETRISCHER DATEN
SYSTEME ET PROCEDE DE PROTECTION DE LA VIE PRIVEE ET DE LA SECURITE DE DONNEES BIOMETRIQUES STOCKEES

(43) Date of publication of application: 16.01.2008
(73) Proprietor: Daon Holdings Limited, George Town, Grand Cayman (KY)
(72) Inventor: WHITE, Conor, Furbo, Co. Galway (IE); PEIRCE, Michael, Dublin 6 (IE)
(74) Representative: Moore, Barry
(86) International application number: PCT/EP2005/051817
(87) International publication number: WO 2006/111205

(56) References cited:
- EP-A- 0 884 670
- WO-A-01/18631
- WO-A-2004/031922
- US-A- 5 606 610

## Description

### Field of the Invention

The present invention relates to the privacy and protection of stored biometric data, and in particular to a computer implemented architectures and methodology providing for the separation of data between repositories.

### Background

Systems for authenticating the identity of an individual are now becoming widely deployed. Such systems may be used to enhance security at a border crossing, to identify individuals in a citizen ID scheme, to allow physical access to a building, to provide logical access to networks and computer applications, to prove identity during retail transactions, amongst many other possible applications.

Known techniques used within such authentication systems for validating the identity of an individual include the use of passwords, tokens, biometrics, or any combination of these. Within a biometric-based system, biometric samples are captured from an individual and enrolled, or stored, within the system for use in later authentications. Examples include fingerprint, iris, or face images, or a recorded sample of a voice.

Features may be extracted from the image to generate biometric templates. These are usually a smaller compact representation of the biometric features present in the image. Typically, the templates are used in the day-today operations of the system to authenticate individuals whereas the original biometric data or images is stored or archived. There are many valid reasons for storing this data. Some examples include:
- Re-generating templates from the data if the original templates are no longer available, such as in a system where templates are stored on a portable card and the card is misplaced or stolen
- Generating templates using an enhanced version of the algorithm
- Allow algorithm migration by generating new templates using different algorithms, without having to re-enroll the user
- Processing the data within biometric experiments including algorithm and sensor benchmarking
- Using the data as part of a forensic examination

Ensuring the security and privacy of stored personal data in today's electronic environment is important. Attempts to gain access to such personal data, such as that against ChoicePoint™, are becoming more and more common. With biometric data, in particular biometric images, these security issues are of a paramount importance. The biometric data must be protected, not only to ensure the security of the authentication scheme, but also to maintain the privacy and rights of its users. If an attacker were able to obtain a biometric image and the identity of the person to whom that image belonged, then there would be no privacy present. Therefore, in the storage of biometric images it is important to note that the biometric in itself provides no indication as to who the person who provided the biometric is, it is the association of that image with an identifier for that person and that couplet or pair that provides the real threat.

As such, even if an attacker is able to gain access, in an unauthorized manner, to the stored biometric images, it should be impossible for that attacker to determine from which individual the biometric data was acquired. The logical link between a user's personal data and the biometric images needs to be protected. Current state-of-the-art biometric storage systems do not provide this capability, as they typically store the user identifier along with the corresponding biometric image in the same database, often using the identifier to index the image for later retrieval.

There is therefore a need to provide a method and system for protecting the privacy of stored biometric data, and in particular ensuring that the link between the biometric data and the user from whom those images were acquired is strongly safeguarded.

WO 2004/031922 discloses a method of storing information concerning an entity. The method comprises the steps executed by computing means of receiving information concerning an entity; receiving (with or separately to the information concerning an entity) an identifier of the entity which the information concerns; causing key preparation computing means to prepare a key dependent on the identifier of the entity using an irreversible computational procedure; and storing, in first data storage means, relatably to the key prepared by the key preparation computing means, some or all of the received information concerning the entity, but not including any information identifying the entity. There is also disclosed a method of transferring data related to an entity and identifying information identifying the entity, the method comprising the steps of ensuring that the data does not include said identifying information, and is hence anonymous, but does include a key, the key being relatable to identifying information identifying the entity to which the data relates by privacy control computing means;
receiving the anonymous data at a recipient computing means; before, during or after said receiving, determining whether the recipient computing means or a user thereof is authorised to match the data to the identifying information and, if so, exchanging the key and the identifying information between the privacy control computing means and the recipient computing means separately from said data; thereby enabling the recipient computing means to match the anonymous data and the identifying information identifying said entity.

WO 01/18631 relates to a method for identifying the source or origin of data in databases containing anonymized data. It is a particularly useful means for providing a patient or his or her medical provider with access to patient data over a network where the data is stored in an anonymized data file.

US Patent no. 5,606,610 discloses a method and apparatus for storing data comprising an original identity (OID) and associated descriptive information (DI). By means of a first algorithm (ALG1), the original identity (OID) is encrypted to an update identity (UID) which, by means of a reversible algorithm (ALG2), is encrypted to a storage identity (SID) which is stored as a record (P) on a storage medium along with associated descriptive information (DI). At the times when storage identities (SID) of selected records (P) are to be replaced with new storage identities (SID'), the storage identities (SID) are decrypted in order to recreate the corresponding update identities (UID), which then are encrypted, by means of a new altered reversible algorithm (ALG2'), to new storage identities (SID') intended to replace the previous storage identities (SID).

### Summary

These and other problems are addressed by a method and system in accordance with the invention which provides for improvements in the privacy and protection of stored biometric data associated with an individual, through use of a number of independent entities and cryptographic techniques.

Accordingly the invention provides a method as claimed in claim 1. Advantageous embodiments are provided in the dependent claims thereto. The invention also provides a network system according to claim 12.

These and other features will be better understood with reference to the description which follows.

### Brief Description of the Drawings

Figure 1 is a process sequence, involving two entities, showing how biometric data is privately stored using data blinding,
Figure 2 is a process sequence, involving two entities, showing how biometric data is privately stored using data splitting in addition to data blinding,
Figure 3 is a process sequence, involving three entities, showing how biometric data is privately stored using data blinding,
Figure 4 is a process sequence, involving three entities, showing how biometric data is privately stored using data splitting in addition to data blinding,
Figure 5 is a process sequence, involving N entities, showing how biometric data is privately stored using data blinding,
Figure 6 is a process sequence, involving N entities, showing how biometric data is privately stored using data splitting in addition to data blinding.

### Detailed Description of the Drawings

Within the present specification certain terms will be used to represent certain components of the system. The following list of definitions is intended to define these terms for ease of explanation and understanding of the following description of an exemplary embodiment of the present invention. It will be understood that these definitions are not intended to limit the invention in any way but are simply presented to ease an understanding of the invention.

### Data Collection Server (DCS)

A system that obtains user-related information, typically including user demographic information and biometric data. This could be part of an authentication server which receives user enrollment data from one or more enrollment applications and/or legacy systems. It may also collect the data directly from the user.

### Biometric Storage Server (BSS)

The Biometric Storage Server is responsible for storing or archiving biometric data. This data might include biometric images and/or biometric templates, and there may be multiple instances of each originating from a single user. The biometric data may only be accessed, retrieved, or operated on by authorized entities.

### Index Governor (IG)

The IG entity, if present, maintains a link, or method for automatically generating that link, from data held at one entity to data held at another entity, where the details of the link are unavailable to any entity outside the IG. In one embodiment the link is between a user identity/record and the corresponding user biometric (image) data. The IG functionality may be implemented on any system or component that can perform the necessary calculations. Implementations may be available on standard host computers, a handheld device, a hardware security module (HSM), or a token with a processor such as a smart card or USB key. If a personal device is used to provide the IG functionality, this may be limited to operating on a smaller number of data elements, typically those belonging to the carrier or owner of the personal device, compared to other implementations.

### Data blinding mechanism (DBM)

The data blinding mechanism takes a data input and produces a data output, where the data output reveals no information about the data input. The data blinding mechanism itself may be a public algorithm, such as a one-way hash function.

### Data splitting mechanism (DSM)

The data splitting mechanism takes a data input and produces two or more data outputs, where a single data output alone reveals no information about the data input. Depending on the data splitting algorithm(s) applied a number of data outputs, derived from the same single data input, may be used to reconstruct the original data input. The data splitting mechanism itself may be a public algorithm, such as an exclusive-OR (XOR) function, as detained in a later example.

### Identity Data Element (IDE)

An Identity Data Element is a piece of information (or a set of IDEs) which comprise information about an individual. Examples of IDEs include (but are not limited to) a unique user identifier within a specified system, social security number, credit card number, email address, employee id, dynamically generated authentication tickets etc.

### User Details Record (UDR)

A user details record is a set of one or more identity data elements containing information about or relating to a specific identified individual. Example information held in a UDR, or set of UDRs, might include name(s), individual physical characteristics such as age/height/sex etc., employment details, home/office addresses, family information, citizenship details, place/country of birth, privileges/benefits associated with the individual, financial history and status, transaction records and so on. There may also be information on the operator(s) who collected or issued the record details.

### Biometric

A biometric is any one of a plurality of biological identifiers which can be associated with a user such as but not limited to an identifier defined by finger, iris, face, voice, hand geometry, gait, DNA etc..

### Biometric Capture Device

A biometric capture device is intended to include devices suitable for reading various biometric modalities including finger, iris, face, voice etc. The Biometric Capture Device for the purpose of this invention also includes the controlling software for the device - whether residing on the device or another device such as a client PC for example.

### Biometric image

A biometric image is the raw sample data acquired using a biometric capture device.
Examples include an image of a fingerprint, iris, face, or hand, or a voice sample recording.

### Biometric template

A biometric template is generated from one or more biometric images by applying one or more processing algorithms. Typically, the processing algorithm will extract features from the biometric image and represent them in a more compact form.

The invention will now be described with reference to an exemplary system which provides a biometric vault that increases privacy and security compared to earlier solutions.

Within the implementation of the system of the present invention methods are provided to separate the association between an individual and their actual biometric identifier(s). It will be appreciated that this separation is advantageous for a number of reasons including: a protection of the privacy of the individual, a protection of the integrity of the storage system, provision of anonymous biometric data for testing purposes.

According to a preferred embodiment of the present invention a DCS collects individual data including one or more IDEs, UDRs, and associated biometric data. The DCS, with or without the aid of one or more IGs, stores the biometric data, indexed by a blinded version of an IDE, within a BSS. Furthermore, the biometric data may be split between multiple entities, including one or more BSS, IG, or DCS entities.

It will be appreciated that in order to implement a secure data storage vault that the individual components within the vault architecture should communicate with one another in a secure manner such as that established through the use of encryption, public key cryptography and digital signatures. Furthermore, in addition to the methods presented in this invention, it is understood that any sensitive data will be stored in a secure manner using traditional security techniques.

It will be appreciated that the method of the present invention provides for the encryption of sensitive data and protocols. Many forms of establishing trust are known and will be appreciated by those skilled in the art including both symmetric and asymmetric encryption, signature schemes, SSL techniques and XML documents.

It will be understood that the concept of storing enrolments and biometric data across organisations or networks has traditionally been viewed as dangerous or controversial from a consumer acceptance perspective. Fears of an attacker gaining access to the data, of selling biometric data, and of giving away identity invoke all the wrong images in the minds of the consumer. The present invention obviates these problems by breaking the link between the biometric data and the individual and by splitting the data securely across multiple locations. Unauthorized access to any one location provides no useful data to an attacker.

### Identity Elements

An individual can have a Personal Identity with multiple Identity Data Elements - for example, a public key certificate with its corresponding private key, a name, a credit card number etc.

### Data blinding function

The data blinding mechanism takes a data input and produces a data output, where the data output reveals no information about the data input. The blinding function should also be collision resistant in that it should be highly unlikely that two different data inputs will produce the same data output.

In a preferred embodiment the data blinding function, Blind(), is a secure hash function, such as SHA-1 or MD5, which is applied to the data input concatenated to a secret random string value, the "salt", known only by the entity performing the blinding. However any suitable secure data blinding function or system may be used.

We use the notation Blind_N(D) to mean that a blinding function has been applied N times to data D. For example:
Blind_1(D) = Blind(D)
Blind_2(D) = Blind(Blind(D))
Blind_3(D) = Blind(Blind(Blind(D)))
Blind_N(D) = Blind(Blind_N-1(D))

The notation does not specify what underlying functionality has been used to implement the blinding function, and when several blinding functions are applied one after another as above, different blinding functions and configuration parameters may be used on each iteration. Multiple blinding functions may also be used, serially or otherwise, within a single iteration.

The blinding function is selected so that the probability of an "output collision", where two different data inputs produce the same output value, is highly unlikely. The selection of an appropriate function will be based on the maximum population size used within the system, amongst other parameters.

Each entity may keep a record of all output values produced when using the blinding function. If a collision does occur a number of options exist. One of these is to add a value either to the data input or to the data output, the result of which is a new data output value. If this additional concatenation is performed, it should be recorded alongside the corresponding data input, so that it may be correctly re-generated at a later date.

One known method to produce a longer output from an existing secure hash function involves the following steps. The data input, M, is hashed to produce H(M). A second hash value is then produced by hashing this first hash value with the original message H(H(M), M). An output value is formed by concatenating the two hash values to produce {H(M), H(H(M), M))}. Even if H(M1) is equal to H(M2), it is extremely unlikely that the final output will now be the same.

### Data splitting mechanism

The data splitting mechanism takes a data input and produces two or more data outputs, where a single data output alone reveals no information about the data input. The notation Split(Input,N) is used to represent the splitting function that takes a single input and returns a set of data with N elements. In a preferred embodiment the data splitting function, Split(Input, N), uses an exclusive-OR (XOR) function. (N-1) random strings, of equal length to the data input, are generated and XOR'd with the input, to produce a final string value. The (N-1) strings and the XOR output string form the pieces of split data. To re-assemble the original input data, all N strings must be XOR'd together. For example, given input I, when N=2:
I XOR D_1 = D_2 (Here D_1 and D_2 are the data output pieces)

To re-assemble the input, given the two data outputs:
D_1 XOR D_2 = I

We use the notation Split (Input, N) => (D_1, D_2, ..., D_N-1, D_N) to refer to the data splitting function which splits a single input into N parts, where the output parts are labelled D_1, D_2, up to D_N.

### Architecture Configurations

A number of system architectures are now presented, showing the exemplary embodiments of the invention. They differ mainly in the number of entities involved, and in the data shared between these entities. All architectures enhance the privacy and security of a traditional biometric data archive.

The architectures covered include:
- Two entities: Data Collection Server and Biometric Storage Server
- Three entities: Data Collection Server, Index Governor, and Biometric Storage Server
- N entities: Data Collection Server, and multiple Index Governors and Biometric Storage Servers

A single Data Collection Server is used for illustrative purposes in the above architectures. However individual identities and biometric data may be collected at multiple collection servers, before being operated on and passed to the other entities participating in the protocols.

The DCS is the first entity that has access to the biometric image data before it is securely and privately stored by the BSS. In the privacy protocols described, the DCS does not keep a copy of the image data after it has been securely stored by the BSS, unless stated otherwise. Furthermore this act will typically be auditable to ensure that the image has in fact been permanently deleted.

### Two entities: Data Collection Server with Biometric Storage Server

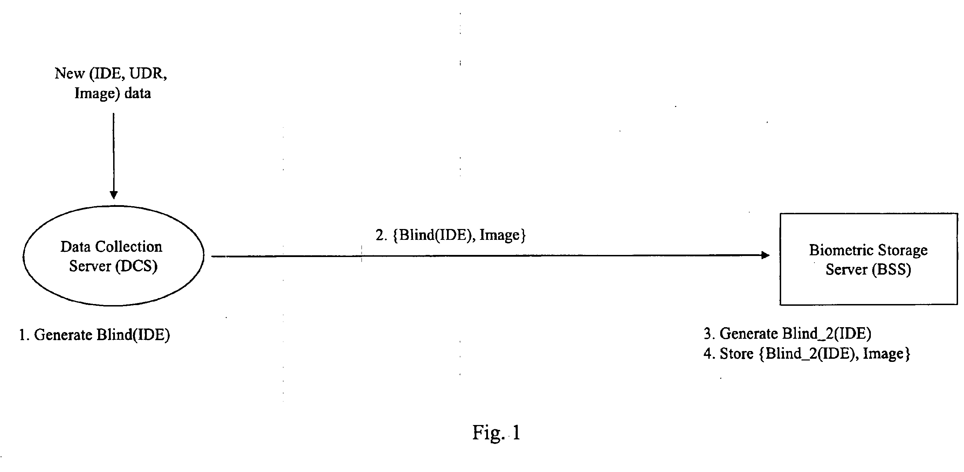

In this configuration the DCS communicates directly with a BSS, as shown in Figure 1.

After an enrolment the DCS will hold the identity data element (IDB), user details record (UDR), and biometric image(s) belonging to an individual. The user details record is stored at the DCS or by external datastores.

In order to store an individual's biometric image in a privacy-enhancing manner, the steps outlined in Figure 1 take place.

Step 1, The DCS applies the preferred data blinding mechanism to the IDE, to generate the value Blind(IDE). This blinds or hides the value of the original IDE, and prevents the holder of Blind(IDE) retrieving the original IDE.

Step 2, The DCS sends the biometric image, along with the blinded IDE to the BSS for storage:
DCS -> BSS: {Blind(IDE), Image}

Step 3, The BSS optionally re-blinds, or double blinds (Blind_2(IDE)), the blinded IDE. This further ensures that both the BSS and DCS must co-operate in order to retrieve the image for a specified IDE. Otherwise only the DCS-generated Blind(IDE) is used as the datastore index to the image.

Step 4, The BSS stores the Image encrypted in its datastore, indexed by the single or double-blinded IDE:
(Blind_2(IDE), Image)

### 2-entity image retrieval

In order to retrieve an Image for a presented IDE, the original DCS must re-create Blind(IDE), then the BSS must re-create Blind_2(IDE) if double-blinding was used, and then this is used as the BSS datastore index to retrieve the correct image.

### 2 entity Image Splitting

One drawback of storing the entire image in a single datastore, even if it is encrypted, is that if that datastore and its associated cryptographic keys are compromised, then all the images are available to the attacker, even if the IDEs remain unknown.

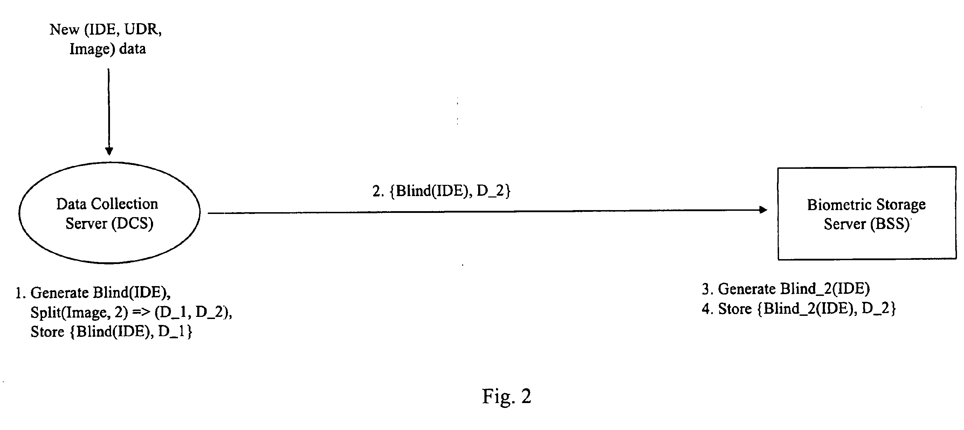

To alleviate this risk, the image data may be split, in a secure manner, between the two entities, and the split parts stored at two separate locations, as shown in Figure 2. In this scenario, the DCS splits the Image, in step 1 above, into two pieces, using Split(Image, 2), generating pieces D_1 and D_2. DCS keeps part D_1 and securely stores it in encrypted form. Part D_2 is sent, instead of the full original Image, to BSS in step 2 above. Now, in the image retrieval process, both the DCS and BSS must combine their two separate parts together to re-generate the original image.

### Three entities: Data Collection Server, Index Governor, and Biometric Storage Server

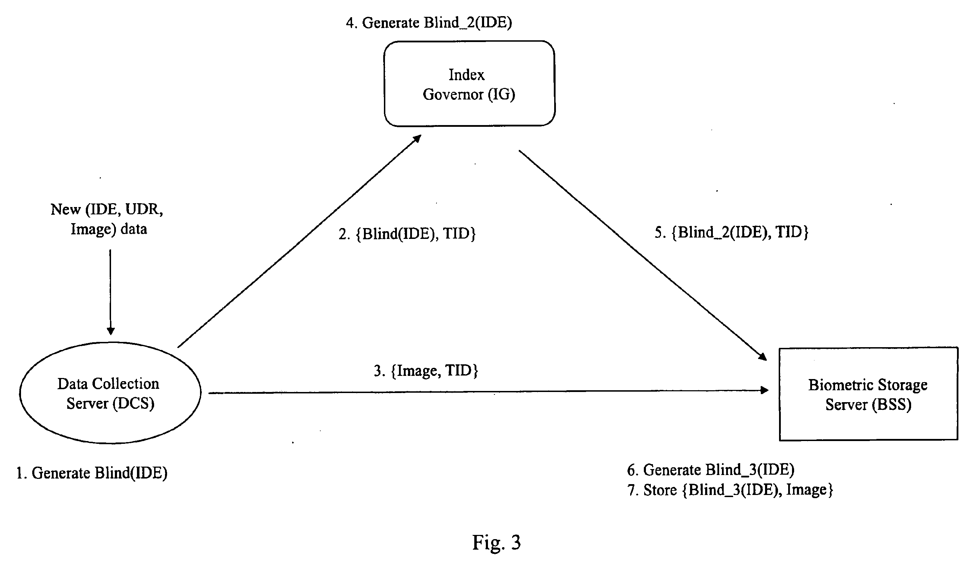

In this configuration the DCS communicates with both the IG and BSS, as shown in Figure 3.

As before, after an enrolment the DCS will hold the IDE, UDR and biometric image(s) belonging to an individual. As mentioned earlier, all communications can be protected using secure network communications protocols, with encryption and digital signing.

To further improve the privacy of biometric data storage, the following steps take place, as outlined in Figure 3:
Step 1, The DCS applies the preferred data blinding mechanism to the IDE, to generate the value Blind(IDE).
Step 2, The DCS sends this along with a transaction identifier (TID) to the IG:
   DCS -> IG: {Blind(IDE), TID}
Step 3, The DCS sends the image and the same TID as used in step 1 to the BSS:
   DCS -> BSS: {Image, TID}
Step 4, The IG blinds the IDE a further time, creating Blind_2(IDE). There is no need to store this, as it can be re-generated when required later. The IG may use a different blinding function than the DCS, and will use a different secret-key or "salt" input to the function in any case.
Step 5, The IG sends the double-blinded IDE to the BSS:
   IG -> BSS: {Blind_2(IDE), TID}
Step 6, In the optional step 6 the BSS further blinds the IDE, to form a triple-blinded value of Blind_3(IDE). This further ensures that the BSS must be intricately involved in order to retrieve the image for a specified IDE.
Step 7, The BSS retrieves the two messages received with the same TID, and stores the double/triple-blinded IDE and the image. The TID need not be stored, as after the transaction it is no longer required.

After the transaction completes, the DCS provably deletes the transaction data including TID. The IG and BSS also delete records of TID.

It is noted that the ordering of some of the communications steps is not strict and can be changed. For example, step 3 can take place before step 2, or both steps can take place at the same time. Similarly, step 5 could take place before step 3. However, steps 6 and 7 must take place in order and be the final steps, if present.

### 3-entity Image Retrieval

In order to retrieve an Image for a presented IDE, the original DCS must re-create Blind(IDE), the IG must then create Blind_2(IDE). If the BSS also blinded the IDE, then it must compute a further blind of this value. The final blinded value (double or triple-blinded) is used as the BSS datastore index to retrieve the correct image.

### 3-entity Image Splitting

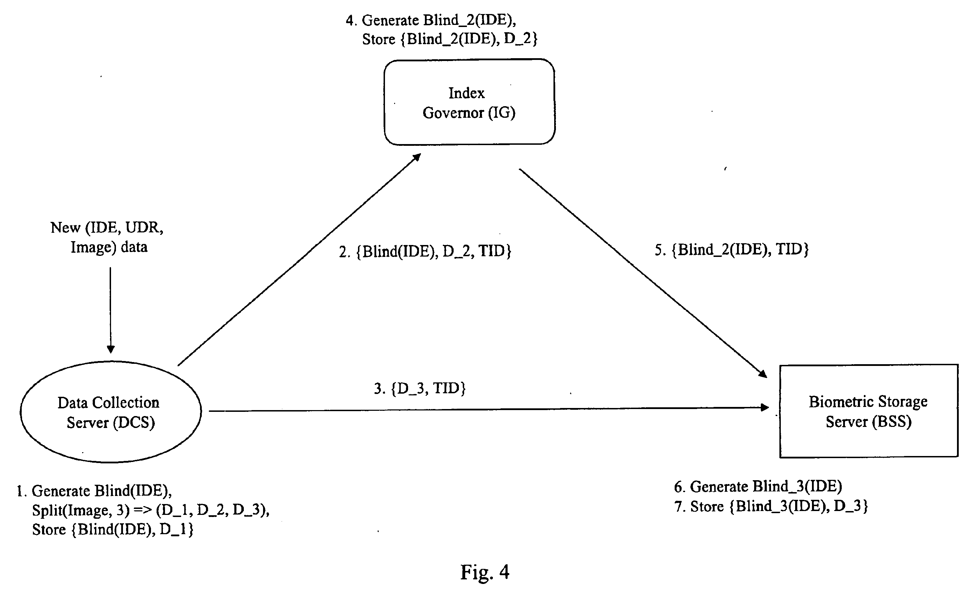

As with the 2-entity protocol, the image may be split into several pieces, as shown in Figure 4.

In the first case, it may be split into two pieces by the DCS who then gives one piece each to the IG and the BSS. If the image is split into data parts D_1 and D_2, then part D_1 is sent to the IG in step 2 and part D_2 is sent to the BSS in step 3.
DCS -> IG: {Blind(IDE), D_1, TID}
IG stores: {Blind_2(IDE), D_1}
DCS -> BSS: {D_2, TID}
BSS stores: {Blind_3(IDE), D_2}

In a second scenario, the data may be split into three pieces by the DCS who then gives one piece each to the IG and the BSS, and keeps the remaining piece. The DCS always deletes any data pieces that it has sent to other entities.

In both cases all involved entities must put their pieces together to assemble the original data. During data reconstruction images may be communicated between the parties using secure network communications or using secure piece recombination protocols as appropriate for the data splitting functions used.

### N entities: Data Collection Server, and multiple Index Governors and Biometric Storage Servers

In this configuration the DCS communicates with a first IG and a BSS. There is a chain of IG entities which communicate amongst themselves. The first IG entity will typically communicate with the 2^{nd} IG entity which in turn will communicate with a 3^{rd} IG if present and so on up to N entities. If data splitting is used then the roles of the IG and BSS entities are very similar.

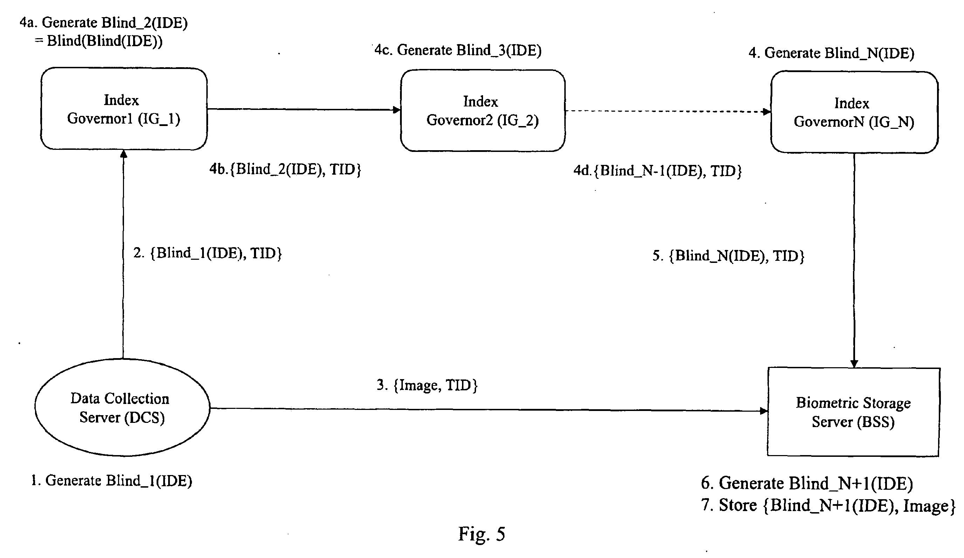

Following data collection the DCS will hold the IDB, UDR and biometric image(s) belonging to an individual. To increase the privacy and security of biometric data storage, the following steps take place, as shown in Figure 5:
Step 1, The DCS applies a data blinding mechanism to the IDE, to generate the value Blind(IDE).
Step 2, The DCS sends the blinded IDE along with a TID to the first IG in the chain:
   DCS -> IG_1: {Blind(IDE), TID}
Step 3, The DCS sends the image and the same TID as used in step 1 to the BSS:
   DCS -> BSS: {Image, TID}
Step 4a, The IG_1 blinds the IDE a further time, creating Blind_2(IDE), and stores it. As before, the IG may use a different blinding function than the DCS, and will use a different secret-value or "salt" input to the function. The salt value should be securely stored, but typically the same salt value will be used for a large number of transactions within a single entity.
Step 4b, The IG_1 sends the re-blinded IDE to the next IG (IG_2) in the chain:
   IG_1 -> IG_2: {Blind_2(IDE), TID}
   IG_2 repeats the process that IG1 performed in steps 4a and 4b. That is, the IG_2 blinds the already blinded IDE a further time, before storing it and then transmitting it on to the next IG entity in the chain.
   The end result is that the final IG in the chain, IG_N, holds an IDE value that has been blinded N times, Blind_N(IDE).
Step 5, The final IG in the chain, IG_N, sends the IDE value that has been blinded N times to the BSS:
   IG_N -> BSS: {Blind_N(IDE), TID}
Step 6, In the optional step 6 the BSS further blinds the IDE, to form a (N+1)-blinded value of Blind_N+1(IDE). This further ensures that the BSS must be intricately involved in order to retrieve the image for a specified IDE.
Step 7, The BSS retrieves the two messages received with the same TID, and stores the N-blinded IDE and the image.

It is noted that the ordering of the communications steps can be modified if required. For example, the DCS can communicate with the BSS before, after, or at the same time as communicating with IG_1.

### N-entity Image Retrieval

In order to retrieve an Image for a presented IDE, the original DCS must re-create Blind(IDE), and the IGs which were originally involved must each re-compute their blinding portion so that the value Blind_N(IDE) is attained. If the BSS also blinded the IDE, then it must compute a final blind of this value. The final blinded value (Blind_N(IDE) or Blind_N+1(IDE)) is used as the BSS datastore index to retrieve the correct image(s).

### N-entity Image Splitting

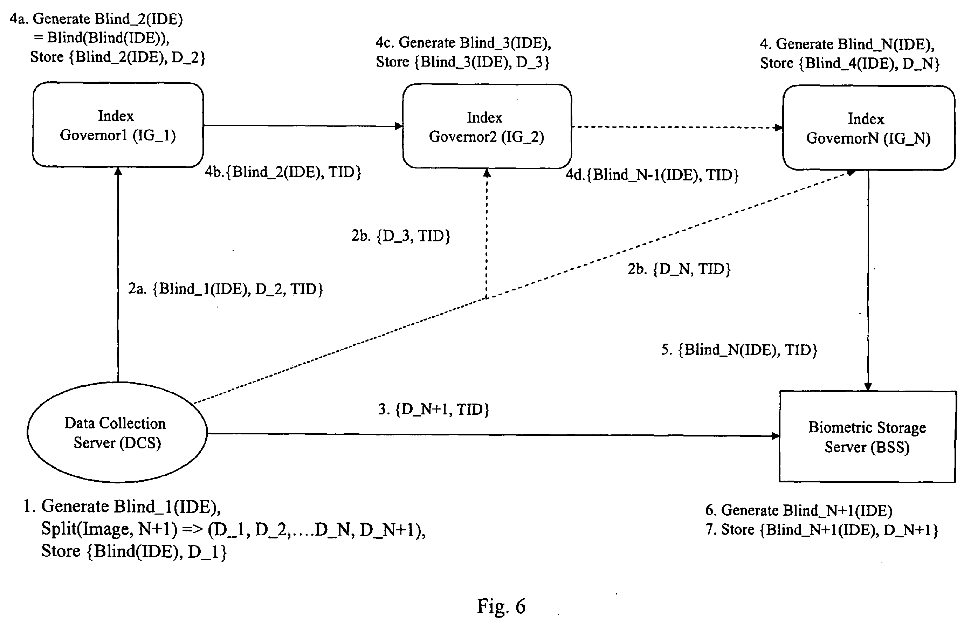

As with the 3-entity protocol, the image may be split into several pieces, as shown in Figure 6. There are a number of options available as to how many pieces to split the data into and who to share it with. The options include, but are not limited to the following:
- Split the data between one or more IGs and the BSS
- Split the data between one or more IGs, the BSS, and the DCS
- After the DCS has split data, let one or more IGs sub-split a piece of data into further pieces and share these pieces with one or more other IGs
Where both the IGs and BSS are storing split data, their roles become very similar.

The entity performing the data splitting operation may distribute the split parts directly to the entities involved, as shown in Figure 6. Alternatively, the split parts may be forwarded to the necessary entities through other entities as part of the blinding protocol described above. In this case the semi-secret split part may be hidden from the entities it is passing through using encryption. One example would be to encrypt the split part with a public key of the entity it is destined for, so that any entities that this information is relayed through, cannot gain access to the data.

All involved entities must put their pieces together to assemble the original data. During data reconstruction piece-data may be communicated between the parties using secure network communications or using secure piece recombination protocols as appropriate for the data splitting functions used.

### Multiple biometrics per individual

Multiple biometric samples may be acquired from an individual. For example, finger images from different fingers might be captured, or images of the iris and face might be acquired. In such cases, the biometric data may be collated together as a single set, and stored privately under the same single IDE value.

Alternatively, a different IDE value may be used for each different biometric image or subset of biometric images to be stored, potentially further increasing privacy. One way to achieve this is to append or prepend an additional identifier for the particular biometric being stored to the original IDE which uniquely identifies the individual within a system, and use this concatenated or transformed IDE. A similar process may be followed when new biometrics are added or replaced for a given individual.

It will be appreciated that the present invention provides a system and methodology specific to the protection of biometrics. By effectively isolating an identifier of the person who provided the biometric and the biometric it is possible to safely and securely store these biometrics for a myriad of future application. The technique of the present invention enables an indexing of the biometric using a personal identifier but once indexed that pairing can only be retrieved if the steps that were used to create the index pair are followed. This means that if a person of unscrupulous nature were to gain access to the biometric storage database that they would not be able to glean information as to which person each of the biometrics related to, and therefore the accessed information is of limited use. The retrieval of the correct biometric for a specific individual requires cooperation between different entities.

As mentioned in the background to the invention the storage of biometrics has many applications. In accordance with the present invention it is now possible to effectively index and store biometrics in a way that allows access to these stored biometrics in a controlled fashion. It is therefore easier to use the stored data, whereas previously the necessity to maintain the security meant that interaction with that stored data was kept to a minimum. By enabling a secure indexing and retrieval, biometric data stored in accordance with the techniques of the present invention may be used more frequently. Examples of such use include the issuance/re-issuance and authentication of biometrically enabled financial cards such as debit, credit, or other payment cards.

In this specific field of financial cards, there is a constant trend towards increasing the security of the use of the cards. The traditional magnetic swipe strip of the card is being replaced with chip and pin technology. A biometric enabled card provides an additional level of security where the personal identifier used to authorise the payment is a parameter generated from a biometric of that person. In such environments, the biometric feature provided on the card will not typically be a raw biometric but rather a template mathematically generated from the raw image. The image, once used to generate the template, can then be stored in accordance with the techniques of the invention. If, at a later date, the template on the card need authentication, against the original enrollment data, then it is possible to retrieve the stored image, regenerate a template from that image and compare the two templates. If they match, then authentication is achieved- if they don't it is not. This authentication will normally be achievable or conducted post transaction but does offer a secure manner to verify that a transaction conducted using a biometrically enabled card was in fact conducted using the card that was originally created from that image. In this way, a user can be satisfied that the card was an authorised card, and it is also more difficult for the user to assert that the card was tampered with and the transaction should not have been authorised. This therefore provides for a secure authentication of the veracity of the card presented for both the retailer and the user of the card.

It will be understood that the invention provides for a secure storage and indexing of user specific information using indexers which are specifically created for that user. The blinding function that creates the blinded identity element breaks the link between the identity of the user that provides the identity element and the processed identity element that is then used as the indexer. Providing this level of anonymity within a storage repository means that the data can be stored for longer periods more securely. In contrast to prior art attempts to securely store personalised data that simply relied on encryption of the data wherein a breaking of the encryption provides the stored data, the present invention stores the information in a manner that requires knowledge of the personal identifiers in order to retrieve data indexed with those identifiers. Enabling the safe storage of this data opens up the opportunity of other applications for example:
- Using the data to decide when and how to update existing templates in a "biometric-aging" scheme and/or
- Applying the data in conjunction with biometric-based cryptography schemes

A data storage architecture and methodology have been described that protects privacy and ensures security. The system includes a plurality of nodes in a networked architecture, the nodes being adapted to securely communicate and co-operate with one another to allow storage and retrieval of data. A single piece of biometric data is associated only with a blinded identifier and securely divided across one or more nodes, adapted for data storage. The data itself and the link to the original individual, from whom the biometric was acquired, cannot be obtained without the cooperation of two or more nodes.

Where the invention has been described with reference to modules or flow sequences it will be appreciated that these may be implemented in computer hardware or software or a combination of the two. Similarly, it will be understood that the use of the words comprises/comprising when used in this specification are to specify the presence of stated features, integers, steps or components but does not preclude the presence or addition of one or more other features, integers, steps, components or groups thereof.

## Claims

1. A method of securely indexing and storing a biometric for subsequent retrieval, the method including the steps of:
a) Enrolling a user at an enrolment location by effecting a capture of a specific biometric from that user and associating that biometric with an identity element specific to that user,
b) Applying a blinding function to the associated identity element so as to provide a blinded identity element, the blinding function taking the identity element as a data input and providing the blinded identity element as a data output, the blinded identity element revealing no information about the data input, **characterised in that** the method includes the further steps of:
c) Generating a transaction identifier at the enrolment location,
d) Associating the transaction identifier with each of the biometric and the blinded identity to form two combinations,
e) Forwarding each of the two combinations separately to a separate storage location the combination containing the blinded identity element being forwarded via an index governor, the index governor, on receiving the blinded identity element being configured to apply a second blinding function to the blinded identity element so as to generate a doubly blinded identity element, the doubly blinded identity element being coupled to the transaction identifier and forwarded to the storage location and at the storage location matching transaction identifiers from each of the two separately received combinations to combine the doubly blinded identity element and the biometric as an index pair,
f) Storing the index pair as a stored pair at the separate storage location,
g) Retrieving the biometric from the stored pair by subsequently providing the same identity element, applying the same blinding functions to that element, the second blinding function being applied by the index governor, so as to recreate the doubly blinded identity element and using the recreated doubly blinded identity element to retrieve the biometric stored with that doubly blinded identity element.

2. The method as claimed in claim 1 wherein the biometric is encrypted prior to storage.

3. The method as claimed in any preceding claim wherein a plurality of blinding functions are applied to the identity element, the plurality of functions being applied in a specific iterative order.

4. The method as claimed in claim 3 wherein a recreated blinded identity element is generated by applying the blinding functions to the identity element in the same order as that used to create the blinded identity element.

5. The method as claimed in any preceding claim further including the step, on formation of the stored pair, of deleting the transaction identifier.

6. The method as claimed in any preceding claim further including the step of sequentially forwarding the combination having the blinded identity element to a plurality of index governors prior to a final transmission of the blinded identity element to the storage location.

7. The method as claimed in any preceding claim further including the step of splitting the biometric into two or more data outputs, each of the individual two or more data outputs being stored at separate locations and wherein in order to recreate the biometric it is necessary to subsequently recombine the data outputs.

8. The method as claimed in claim 7 including the step of further splitting a data output from a splitting function.

9. The method as claimed in any preceding claim further including the steps of enrolling multiple biometrics for a specific user, collating the multiple enrolled biometrics into a single biometric set, and using a single identity element to index this biometric set.

10. The method as claimed in any one of claims 1 to 9 further including the steps of enrolling multiple biometrics for a specific user, and using different identity elements for one or more of the multiple biometrics for indexing purposes.

11. The method as claimed in any one of claims 1 to 10 further including the steps of:
a) Retrieving the biometric image from the storage location,
b) Using the retrieved biometric to generate an authenticating biometric template,
c) Comparing the authenticating biometric template with the biometric template previously generated, and authenticating the veracity if the templates match.

12. A computer implemented biometric storage and authentication system, the system comprising:
a) a first module configured to enable a enrolment of a user by effecting a capture of a specific biometric from that user and associating that biometric with an identity element specific to that user,
b) a second module configured to effect an application of a blinding function to the associated identity element so as to provide a blinded identity element, the blinding function taking the identity element as a data input and providing the blinded identity element as a data output, the blinded identity element revealing no information about the data input,**characterised in that** the architecture further comprises:
c) a third module, located at the enrolment location, configured to generate a transaction identifier and to associate the transaction identifier with each of the biometric and the blinded identity to form two combinations and to forward each of the two combinations separately to a remote repository,
d) an index governor provided between the third module and the remote repository, the index governor being configured on receiving a blinded identity element to apply a second blinding function to the blinded identity element so as to generate a doubly blinded identity element, the doubly blinded identity element being coupled to the transaction identifier for forwarding to the remote repository for association with the biometric and storage as a stored pair.
e) a fourth module located at the remote repository and configured to match the transactions identifiers from each of the two separately received combinations to effect a combination of the doubly blinded identity element and the biometric so as to form an index pair and to effect a storing of the index pair as a stored pair, and
f) retrieval modules configured to enable a retrieval of the biometric from the stored pair by subsequently providing the same identity element, applying the same blinding functions to that element, the second blinding function being applied by the index governor so as to recreate the doubly blinded identity element and using the recreated doubly blinded identity element to retrieve the biometric stored with that doubly blinded identity element.

13. The system as claimed in claim 12 wherein the repository and at least one of the first, second and third modules are provided on distinct nodes within a networked computer architecture.

14. The system as claimed in claim 12 or 13 further including a data splitting module, the data splitting module being configured to enable a splitting of at least one of the identity element or biometric into two or more constituent parts.

15. The system as claimed in claim 14 wherein the splitting module provides for a storage of each of the two or more constituent parts on separate nodes of the network.

16. The system as claimed in claim 12 wherein the second module is configured to apply multiple blinding functions in an iterative process, the resultant blinded identity element having been blinded through a plurality of steps.

17. The system as claimed in claim 12 further including an encryption module, the encryption module being configured to encrypt one or more of the elements of the stored pair.

## Patentansprüche

1. Verfahren zur sicheren Indizierung und Speicherung eines biometrischen Merkmals zum späteren Abrufen, wobei das Verfahren die Schritte enthält:
a) Anmelden eines Benutzers bei einer Anmeldungsstelle durch Bewirken einer Erfassung eines spezifischen biometrischen Merkmals dieses Benutzers und Zuordnen dieses biometrischen Merkmals zu einem für den Benutzer spezifischen Identitätselement,
b) Anwenden einer Ausblendfunktion auf das zugeordnete Identitätselement, um ein ausgeblendetes Identitätselement bereitzustellen, wobei die Ausblendfunktion das Identitätselement als eine Dateneingabe verwendet und das ausgeblendete Identitätselement als eine Datenausgabe bereitstellt, wobei das ausgeblendete Identitätselement keine Informationen über die Dateneingabe zeigt, **dadurch gekennzeichnet, dass** das Verfahren die weiteren Schritte enthält:
c) Erzeugen eines Transaktions-Identifizierungszeichens an der Anmeldungsstelle,
d) Zuordnen des Transaktions-Identifizierungszeichens zu jedem der biometrischen Merkmale und der ausgeblendeten Identität, um zwei Kombinationen zu bilden,
e) getrenntes Übermitteln jeder der zwei Kombinationen an eine eigene Speicherstelle, wobei die die ausgeblendete Identität enthaltende Kombination über einen Indexregler übermittelt wird, der so konfiguriert ist, dass er beim Empfang des ausgeblendeten Identitätselements eine zweite Ausblendfunktion auf das ausgeblendete Identitätselements anwendet, um ein doppelt ausgeblendetes Identitätselement zu erzeugen, wobei das doppelt ausgeblendete Identitätselement mit dem Transaktions-Identifizierungszeichen gekoppelt und an die Speicherstelle übermittelt wird, und Abgleichen der Transaktions-Identifizierungszeichen von jeder der zwei getrennt empfangenen Kombinationen an der Speicherstelle, um das doppelt ausgeblendete Identitätselement und das biometrische Merkmal zu einem Indexpaar zu kombinieren,
f) Speichern des Indexpaars als ein gespeichertes Paar an der eigenen Speicherstelle,
g) Abrufen des biometrischen Merkmals aus dem gespeicherten Paar durch anschließendes Bereitstellen desselben Identitätselements durch Anwenden derselben Ausblendfunktionen auf das Element, wobei die zweite Ausblendfunktion vom Indexregler angewendet wird, um das doppelt ausgeblendete Identitätselement wiederherzustellen, und das wiederhergestellte doppelt ausgeblendete Identitätselement verwendet wird, um das mit diesem doppelt ausgeblendeten Identitätselement gespeicherte biometrische Merkmal abzurufen.

2. Verfahren nach Anspruch 1, bei dem das biometrische Merkmal vor dem Speichern verschlüsselt wird.

3. Verfahren nach einem der vorigen Ansprüche, bei dem eine Mehrzahl Ausblendfunktionen auf das Identitätselement angewendet wird, wobei die Mehrzahl Funktionen in einer spezifischen iterativen Reihenfolge angewendet wird.

4. Verfahren nach Anspruch 3, bei dem ein wiederhergestelltes ausgeblendetes Identitätselement durch Anwenden der Ausblendfunktionen auf das Identitätselement in derselben Reihenfolge wie die, die zum Erzeugen des ausgeblendeten Identitätselements verwendet worden ist.

5. Verfahren nach einem der vorigen Ansprüche, das ferner den Schritt enthält, in dem beim Bilden des gespeicherten Paares das Transaktions-Identifizierungszeichen gelöscht wird.

6. Verfahren nach einem der vorigen Ansprüche, das ferner den Schritt enthält, in dem die Kombination mit dem ausgeblendeten Identitätselement vor der endgültigen Übertragung des ausgeblendeten Identitätselements an die Speicherstelle an eine Mehrzahl Indexregler sequentiell übermittelt wird.

7. Verfahren nach einem der vorigen Ansprüche, das ferner den Schritt enthält, in dem das biometrische Merkmal in zwei oder mehr Datenausgaben geteilt wird, wobei jede der einzelnen zwei oder mehr Datenausgaben an getrennten Stellen gespeichert wird, und bei dem es zur Wiederherstellung des biometrischen Merkmals erforderlich ist, die Datenausgaben anschließend erneut zu kombinieren.

8. Verfahren nach Anspruch 7, das den Schritt enthält, in dem eine Datenausgabe einer Teilungsfunktion weiter geteilt wird.

9. Verfahren nach einem der vorigen Ansprüche, das ferner die Schritte enthält, in denen mehrere biometrische Merkmale für einen spezifischen Benutzer angemeldet werden, die angemeldeten mehreren biometrischen Merkmale zu einem einzigen biometrischen Satz gemischt werden und ein einzelnes Identitätselement zum Indizieren dieses biometrischen Satzes verwendet wird.

10. Verfahren nach einem der Ansprüche 1 bis 9, das ferner die Schritte enthält, in denen mehrere biometrische Merkmale für einen spezifischen Benutzer angemeldet werden, und verschiedene Identitätselemente zu Indizierzwecken für eines oder mehrere der biometrischen Merkmale verwendet werden.

11. Verfahren nach einem der Ansprüche 1 bis 10, das ferner die Schritte enthält:
a) Abrufen des biometrischen Bildes aus der Speicherstelle,
b) Verwenden des abgerufenen biometrischen Bildes zum Erzeugen einer biometrischen Authentifizierungsschablone,
c) Vergleichen der biometrischen Authentifizierungsschablone mit der zuvor erzeugen biometrischen Schablone und Authentifizieren der Richtigkeit, wenn die Schablonen übereinstimmen.

12. Computerimplementierter biometrischer Speicher und Authentifizierungssystem, wobei das System aufweist:
a) ein erstes Modul, das zum Ermöglichen der Anmeldung eines Benutzers durch Bewirken einer Erfassung eines spezifischen biometrischen Merkmals dieses Benutzers und Zuordnen dieses biometrischen Merkmals zu einem für den Benutzer spezifischen Identitätselements konfiguriert ist,
b) ein zweites Modul, das zum Bewirken der Anwendung einer Ausblendfunktion auf das zugeordnete Identitätselement konfiguriert ist, um ein ausgeblendetes Identitätselement bereitzustellen, wobei die Ausblendfunktion das Identitätselement als eine Dateneingabe verwendet und das ausgeblendete Identitätselement als eine Datenausgabe bereitstellt, wobei das ausgeblendete Identitätselement keine Informationen über die Dateneingabe zeigt, **dadurch gekennzeichnet, dass** das System ferner aufweist:
c) ein drittes an der Anmeldungsstelle angeordnetes Modul, das zum Erzeugen eines Transaktions-Identifizierungszeichens und zum Zuordnen des Transaktions-Identifizierungszeichens zu jedem der biometrischen Merkmale und der ausgeblendeten Identität zum Bilden von zwei Kombinationen und zum getrennten Übermitteln jeder der zwei Kombinationen an eine ferne zentrale Datenbank konfiguriert ist,
d) einen zwischen dem dritten Modul und der fernen zentralen Datenbank bereitgestellten Indexregler, der so konfiguriert ist, dass er beim Empfang des ausgeblendeten Identitätselements eine zweite Ausblendfunktion auf das ausgeblendete Identitätselements anwendet, um ein doppelt ausgeblendetes Identitätselement zu erzeugen, wobei das doppelt ausgeblendete Identitätselement mit dem Transaktions-Identifizierungszeichen gekoppelt und an die ferne zentrale Datenbank zur Zuordnung zum biometrischen Merkmal und Speichern als ein gespeichertes Paar übermittelt wird,
e) ein in der fernen zentralen Datenbank angeordnetes viertes Modul, das zum Abgleichen der Transaktions-Identifizierungszeichen von jeder der zwei getrennt empfangenen Kombinationen konfiguriert ist, um eine Kombination des doppelt ausgeblendeten Identitätselements und des biometrischen Merkmals sowie das Speichern des Indexpaars als ein gespeichertes Paar zu bewirken, und
f) Abrufmodule, die so konfiguriert sind, dass sie das Abrufen des biometrischen Merkmals aus dem gespeicherten Paar durch anschließendes Bereitstellen desselben Identitätselements ermöglichen, wobei dieselben Ausblendfunktionen auf das Element angewendet werden, wobei die zweite Ausblendfunktion vom Indexregler angewendet wird, um das doppelt ausgeblendete Identitätselement wiederherzustellen, und das wiederhergestellte doppelt ausgeblendete Identitätselement verwendet wird, um das mit diesem doppelt ausgeblendeten Identitätselement gespeicherte biometrische Merkmal abzurufen.

13. System nach Anspruch 12, bei dem die zentrale Datenbank und mindestens eines des ersten, zweiten und dritten Moduls an verschiedenen Knoten innerhalb einer vernetzten Computerarchitektur bereitgestellt sind.

14. System nach Anspruch 12 oder 13, das ferner ein Datenteilungsmodul enthält, wobei das Datenteilungsmodul so konfiguriert ist, dass es eine Teilung mindestens eines des Identitätselements oder des biometrischen Merkmals in zwei oder mehr Bestandteile ermöglicht.

15. System nach Anspruch 14, bei dem das Teilungsmodul für die Speicherung jedes der zwei oder mehr Bestandteile an getrennten Knoten des Netzes sorgt.

16. System nach Anspruch 12, bei dem das zweite Modul so konfiguriert ist, dass es mehrere Ausblendfunktionen in einem iterativen Prozess anwendet, wobei das resultierende ausgeblendete Identitätselement durch eine Mehrzahl Schritte ausgeblendet worden ist.

17. System nach Anspruch 12, das ferner ein Verschlüsselungsmodul enthält, wobei das Verschlüsselungsmodul so konfiguriert ist, dass es ein oder mehrere Elemente des gespeicherten Paares verschlüsselt.

## Revendications

1. Procédé pour indexer et stocker de manière sécurisée des données biométriques en vue d'une récupération ultérieure, le procédé comprenant les étapes consistant à :
a) enregistrer un utilisateur au niveau d'un emplacement d'enregistrement en effectuant une capture d'une donnée biométrique spécifique à partir de cet utilisateur, et en associant cette donnée biométrique à un élément d'identité spécifique à cet utilisateur,
b) appliquer une fonction de masquage à l'élément d'identité associé de manière à fournir un élément d'identité masqué, la fonction de masquage prenant l'élément d'identité en tant qu'entrée de données, et fournissant l'élément d'identité masqué en tant que sortie de données, l'élément d'identité masqué ne divulguant aucune information au sujet de l'entrée de données, **caractérisé en ce que** le procédé comprend les étapes supplémentaires consistant à :
c) générer un identifiant de transaction au niveau de l'emplacement d'enregistrement,
d) associer l'identifiant de transaction à chaque élément parmi la donnée biométrique et l'élément d'identité masqué pour former deux combinaisons,
e) transférer chacune des deux combinaisons séparément vers un emplacement de stockage séparé, la combinaison contenant l'élément d'identité masqué étant transférée via un contrôleur d'index, le contrôleur d'index, lors de la réception de l'élément d'identité masqué, étant configuré pour appliquer une seconde fonction de masquage à l'élément d'identité masqué de manière à générer un élément d'identité doublement masqué, l'élément d'identité doublement masqué étant couplé à l'identifiant de transaction et transféré vers l'emplacement de stockage et, au niveau de l'emplacement de stockage, mettre en correspondance des identifiants de transaction provenant de chacune des deux combinaisons reçues séparément pour combiner l'élément d'identité doublement masqué et la donnée biométrique sous la forme d'une paire d'index,
f) stocker la paire d'index en tant que paire d'index stockée au niveau de l'emplacement de stockage séparé,
g) récupérer la donnée biométrique à partir de la paire stockée en fournissant de manière consécutive le même élément d'identité, appliquant les mêmes fonctions de masquage à cet élément, la seconde fonction de masquage étant appliquée par le contrôleur d'index, de manière à recréer l'élément d'identité doublement masqué, et en utilisant l'élément d'identité doublement masqué pour récupérer la donnée biométrique stockée avec cet élément d'identité doublement masqué.

2. Procédé selon la revendication 1, dans lequel la donnée biométrique est cryptée avant le stockage.

3. Procédé selon l'une quelconque des revendications précédentes, dans lequel une pluralité de fonctions de masquage sont appliquées à l'élément d'identité, la pluralité de fonctions étant appliquées dans un ordre itératif spécifique.

4. Procédé selon la revendication 3, dans lequel un élément d'identité masqué recréé est généré en appliquant les fonctions de masquage à l'élément d'identité dans le même ordre que celui utilisé pour créer l'élément d'identité masqué.

5. Procédé selon l'une quelconque des revendications précédentes, comprenant en outre, lors de la formation de la paire stockée, l'étape consistant à supprimer l'identifiant de transaction.

6. Procédé selon l'une quelconque des revendications précédentes, comprenant en outre l'étape consistant à transférer de manière séquentielle la combinaison ayant l'élément d'identité masqué à une pluralité de contrôleurs d'index, avant une transmission finale de l'élément d'identité masqué à l'emplacement de stockage.

7. Procédé selon l'une quelconque des revendications précédentes, comprenant en outre l'étape consistant à diviser la donnée biométrique en deux sorties de données, ou plus, chacune des deux sorties de données individuelles, ou plus, étant stockée au niveau d'emplacements séparés, et dans lequel, afin de recréer la donnée biométrique, il est nécessaire de recombiner de manière consécutive les sorties de données.

8. Procédé selon la revendication 7, comprenant l'étape consistant en outre à diviser une sortie de données à partir d'une fonction de division.

9. Procédé selon l'une quelconque des revendications précédentes, comprenant en outre les étapes consistant à enregistrer de multiples données biométriques pour un utilisateur spécifique, collationner les multiples données biométriques enregistrées en un ensemble biométrique unique, et utiliser un élément d'identité unique pour indexer cet ensemble biométrique.

10. Procédé selon l'une quelconque des revendications 1 à 9, comprenant en outre les étapes consistant à enregistrer de multiples données biométriques pour un utilisateur spécifique, et à utiliser différents éléments d'identité pour une ou plusieurs des multiples données biométrique à des fins d'indexation.

11. Procédé selon l'une quelconque des revendications 1 à 10, comportant en outre les étapes consistant à :
a) récupérer l'image biométrique à partir de l'emplacement de stockage,
b) utiliser l'image biométrique récupérée pour générer un modèle biométrique d'identification,
c) comparer le modèle biométrique d'authentification avec le modèle biométrique généré précédemment, et authentifier la véracité de la correspondance des modèles.

12. Système de stockage et d'identification de données biométriques implémenté par ordinateur, comprenant :
a) un premier module configuré pour permettre un enregistrement d'un utilisateur en effectuant une capture d'une donnée biométrique spécifique provenant de cet utilisateur, et en associant cette donnée biométrique avec un élément d'identité spécifique à cet utilisateur,
b) un deuxième module configuré pour effectuer une application d'une fonction de masquage à l'élément d'identité associé de manière à fournir un élément d'identité masqué, la fonction de masquage prenant l'élément d'identité en tant qu'entrée de données, et fournissant l'élément d'identité masqué en tant que sortie de données, l'élément d'identité masqué ne révélant pas d'information concernant l'entrée de données, **caractérisé en ce que** l'architecture comporte en outre :
c) un troisième module, situé au niveau de l'emplacement d'enregistrement, configuré pour générer un identifiant de transaction, et pour associer l'identifiant de transaction à chaque élément que sont la donnée biométrique et l'élément d'identité masqué, pour former deux combinaisons et transférer chacune des deux combinaisons séparément vers un référentiel distant,
d) un contrôleur d'index agencé entre le troisième module et le référentiel distant, le contrôleur d'index étant configuré pour recevoir un élément d'identité masqué afin d'appliquer une seconde fonction de masquage à l'élément d'identité masqué, de manière à générer un élément d'identité doublement masqué, l'élément d'identité doublement masqué étant couplé à l'identifiant de transaction pour un transfert vers le référentiel distant pour une association avec la donnée biométrique, et un stockage sous la forme d'une paire stockée,
e) un quatrième module situé au niveau du référentiel distant, et configuré pour faire correspondre les identifiants de transaction provenant de chacune des deux combinaisons reçues séparément afin d'effectuer une combinaison de l'élément d'identité doublement masqué et de la donnée biométrique de manière à former une paire d'index, et à effectuer un stockage de la paire d'index sous la forme d'une paire stockée, et
f) des modules de récupération configurés pour permettre une récupération de la donnée biométrique à partir de la paire stockée en fournissant ensuite le même élément d'identité, en appliquant les mêmes fonctions de masquage à cet élément, la deuxième fonction de masquage étant appliquée par le contrôleur d'index, de manière à recréer l'élément d'identité doublement masqué, et en utilisant l'élément d'identité doublement masqué pour récupérer la donnée biométrique associée à cet élément d'identité doublement masqué.

13. Système selon la revendication 12, dans lequel le référentiel est au moins un parmi les premier, deuxième et troisième modules sont agencés sur des noeuds distincts dans une architecture informatique en réseau.

14. Système selon la revendication 12 ou 13, comprenant en outre un module de division de données, le module de division de données étant configuré pour permettre une division d'au moins un élément parmi l'élément d'identité ou la donnée biométrique en deux parties constitutives ou plus.

15. Système selon la revendication 14, dans lequel le module de découpage est prévu pour un stockage de chacune des deux parties constitutives ou plus sur des noeuds séparés du réseau.

16. Système selon revendication 12, dans lequel le deuxième module est configuré pour appliquer de multiples fonctions de masquage dans un processus itératif, l'élément d'identité masqué résultant ayant été masqué à travers une pluralité d'étapes.

17. Système selon la revendication 12, comprenant en outre un module de cryptage, le module de cryptage étant configuré pour crypter un ou plusieurs des éléments de la paire stockée.
